(19) **Europäisches Patentamt / European Patent Office / Office européen des brevets**

(11) **EP 1 265 932 B1**

(12) **EUROPÄISCHE PATENTSCHRIFT**

(45) Veröffentlichungstag und Bekanntmachung des Hinweises auf die Patenterteilung:
**12.12.2007 Patentblatt 2007/50**

(21) Anmeldenummer: **01931483.0**

(22) Anmeldetag: **27.02.2001**

(51) Int Cl.:
**C08C 1/07** *(2006.01)*

(86) Internationale Anmeldenummer:
**PCT/EP2001/002189**

(87) Internationale Veröffentlichungsnummer:
**WO 2001/068715 (20.09.2001 Gazette 2001/38)**

(54) **VERFAHREN ZUR AGGLOMERATION VON FEINTEILIGEN POLYBUTADIENLATICES**

METHOD FOR AGGLOMERATING FINELY DIVIDED POLYBUTADIENE LATICES

PROCEDE D'AGGLOMERATION DE LATEX DE POLYBUTADIENE A FINES PARTICULES

(84) Benannte Vertragsstaaten:
**DE ES FR GB IT NL**

(30) Priorität: **10.03.2000 DE 10011703**
**19.01.2001 DE 10102210**

(43) Veröffentlichungstag der Anmeldung:
**18.12.2002 Patentblatt 2002/51**

(73) Patentinhaber: **LANXESS Deutschland GmbH**
**51369 Leverkusen (DE)**

(72) Erfinder:
- **VANHOORNE, Pierre**
  **40211 Düsseldorf (DE)**
- **JANSEN, Bernhard**
  **51061 Köln (DE)**
- **EICHENAUER, Herbert**
  **41539 Dormagen (DE)**
- **MEYER, Rolf-Volker**
  **53804 Much (DE)**

(56) Entgegenhaltungen:
**EP-A- 0 029 613        EP-A- 0 249 554**
**US-A- 5 470 895**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 265 932 B1

**Beschreibung**

Die Erfindung betrifft ein Verfahren zur Agglomeration von feinteiligen Kautschuklatices durch Zugabe eines amphiphilen Block-Copolymers. Unter Agglomeration soll vorliegend das Zusammentreten von Latexteilchen zu kugeligen Haufwerken verstanden werden, wobei die Primärteilchen partiell bis völlig miteinander verschmolzen sind.

Grobe Kautschukteilchen können durch direkte Emulsionspolymerisation hergestellt werden, wie z. B. in den DE-A 1 247 665 und 1 269 360 beschrieben wird. Diese direkten Polymerisationsverfahren haben jedoch den Nachteil langer Polymerisationszeiten, in der Regel mehrere Tage, bis der gewünschte Teilchendurchmesser bei fast vollständigem Umsatz erreicht wird. Um die Polymerisationzeiten so kurz wie möglich zu halten, werden außerdem oft hohe Polymerisationstemperaturen verwendet. Dabei tritt die Bildung schwer entfernbarer Diels-Alder-Addukte wie Vinylcyclohexen auf, die hartnäckig in den Latexteilchen verbleiben.

Als Alternative zur direkten Polymerisation können die groben Kautschukteilchen durch die Agglomeration von feinteiligen Latices erzeugt werden. Unter feinteiligen Latices sollen solche mit mittlerem Teilchendurchmesser (DVN) von 40 bis 250 nm verstanden werden. Je feinteiliger der Latex, umso kürzer die Polymerisationszeit. Die Agglomeration kann durch physikalische und chemische Vorgänge ausgelöst werden. Sehr schwierig ist dabei die Bildung von unerwünschtem Koagulat, d.h. von sehr grossen Agglomeraten (mehrere $\mu$m bis zur mm Größe) die sich aus der Dispersion abtrennen und nicht redispergierbar sind, zu vermeiden. Derartige Grobanteile mindern auch den Glanz und beeinträchtigen die mechanischen und Oberflächen-Eigenschaften vom aus dem Latex hergestellten Kunstoffen, z. B. ABS.

Eine chemische Methode zur Vergrößerung von Kautschuklatices ist in der DE-A 2 606 715 beschrieben. Dabei wird dem Kautschuklatex Essigsäureanhydrid zugesetzt. Die durch Hydrolyse freigesetzte Essigsäure neutralisiert den Carboxylatemulgator und destabilisiert den Latex, bis die Kautschukteilchen agglomerieren. Das Verfahren ist allerdings nur mit schwachsauren Emulgatoren anwendbar, wie z. B. Salzen organischer Säuren. Latices, die mit hochwirksamen Sulfonat- oder Sulfat-Emulgatoren stabilisiert werden, sind mit dieser Methode nicht agglomerierbar. Außerdem hat das Verfahren den Nachteil, dass der agglomerierende Latex wegen seiner extremen Scherempfindlichkeit während der Agglomerationsphase nicht gerührt werden darf und nach der Agglomeration mit säurestabilen Emulgatoren bzw. Lauge stabilisiert werden muß. Dadurch entsteht eine hohe Abwasserbelastung. Insbesondere scheidet die Möglichkeit einer kontinuierlich durchgeführten Agglomeration aus. Ein kontinuierliches Agglomerationsverfahren hat den großen Vorteil, bei Störungen der Agglomeration bzw. Abweichungen von der erwünschten mittleren Agglomeratgröße steuernd und regelnd eingreifen zu können.

Nach der Lehre der DE-A 2 645 082 wird die Agglomeration durch oxidiertes Polyethylenoxid ausgelöst. Die agglomerierten Latices weisen dabei eine sehr breite Teilchengrößenverteilung auf, was von Nachteil ist z.B. in der ABS-Herstellung. Außerdem sind die nach dieser Methode gewonnenen Latices während weiterer Aufarbeitungsschritte nur bedingt stabil. Wird unoxidiertes Polyethylenoxid (PEO) verwendet, müssen Ammoniumsalze zugesetzt werden (US-A 3 288 741), was zu einer höheren Abwasserbelastung führt. In der EP-A 330 865 wird verzweigtes Polyethylenoxid vor bzw. während der Emulsionspolymerisation eingesetzt. Wiederum müssen erhebliche Mengen an Alkali- oder Ammoniumsalzen eingesetzt werden. Auch die Verwendung von PEO-haltigen Emulgatoren wird z. B. in DE-A 2 323 547 (=US-A 4 014 843) oder US-A 4 680 321 beschrieben. Dabei entstehen breite Teilchengrößenverteilungen mit einem erheblichen Anteil an nichtagglomerierten feinteiligen Kautschukteilchen und die Koagulatbildung kann nur unter Verwendung von Hilfsemulgatoren vermieden werden.

In der DE-A 2 427 960 wird ein zweiter, carboxyl- oder amidgruppenhaltiger Latex als Agglomeriermittel verwendet. Die agglomerierten Latices haben eine sehr breite Teilchengrößenverteilung und enthalten einen erheblichen Anteil an nichtagglomerierten feinteiligen Kautschukteilchen. Wenn als Agglomeriermittel ein Latex verwendet wird, der mit einem PEO-PS-PEO Triblock-Copolymer stabilisiert ist, werden nach Lehre der EP-A 249 554 enge Teilchengrößenverteilungen ohne Koagulatbildung erreicht. Die Herstellung des als Agglomeriermittel verwendeten Latex bereitet allerdings Schwierigkeiten. Beide Verfahren beruhen auf der aufwendigen Herstellung eines zweiten Latex, die zusätzliche Kosten verursacht.

Aufgabe der Erfindung ist es, ein umweltfreundliches und kostengünstiges Verfahren zu entwickeln, nach dem in großtechnischem Maßstab und in wirtschaflich durchführbarer Weise schnell und koagulatarm feinteilige Kautschuklatices zu einheitlich groben Kautschuklatices agglomeriert werden können.

Diese Aufgabe wird überraschenderweise dadurch gelöst, dass man amphiphile Block-Copolymere, die bestimmte Minimalmolgewichte für die hydrophile und hydrophobe Blöcke aufweisen, für die Agglomeration einsetzt.

Gegenstand der Erfindung ist daher ein Verfahren zur Agglomeration von feinteiligen Kautschuklatices durch Zugabe einer wasserhaltigen Lösung eines wasserlöslichen amphiphilen Block-Copolymers, bestehend aus mindestens einem hydrophilen Segment und mindestens einem hydrophoben Segment, dadurch gekennzeichnet, dass das Molgewicht HB des größten hydrophoben Segments und das Molgewicht HL des größten hydrophilen Segments des amphiphilen Copolymers folgende Mindestwerte überschreiten:

$$HB > 500 \text{ g/mol}$$

und

$$HL > 2000 \text{ g/mol}.$$

Unter Segment ist ein zusammenhängender, linearer, verzweigter oder zyklischer Teil des Copolymermoleküls zu verstehen, der vergleichbar hydrophobe bzw. hydrophile Eigenschaften entlang seiner Struktur aufweist.

Die zu agglomerierenden Kautschuklatices werden durch Emulsionspolymerisation hergestellt aus: Mindestens einem Monomeren ausgewählt aus der Gruppe bestehend aus: Butadien, Isopren, Alkylacrylate, bevorzugt $C_1$-$C_8$ Alkylacrylate, Propylenoxid, Dimethylsiloxan, Phenylmethylsiloxan; bis zu 30, bevorzugt bis zu 20 Gewichtsprozent anderer Monomere wie z. B. (Meth)acrylester, Styrol, Acrylnitril, Glycidyl(meth)acrylat, Allylvinylether; und bis zu 10, vorzugsweise bis zu 5 Gewichtsprozent vernetzender bifunktioneller Monomere wie z. B. Divinylbenzol, Ethylenglycoldimethacrylat, Ethylenglycoldiacrylat. Besonders bevorzugt werden Latices aus Butadien, mit bis zu 30, vorzugsweise bis zu 15 Gewichtsprozent anderer Monomere wie beispielhaft und bevorzugt (Meth)Acrylester, Isopren, Styrol, Acrylnitril und bis zu 10, vorzugsweise bis zu 5 Gewichtsprozent vernetzender bifunktioneller Monomere wie z. B. Divinylbenzol, Ethylenglycoldimethacrylat, Ethylenglycoldiacrylat hergestellt. Der Kautschuk ist durch seine Glasübergangstemperatur gekennzeichnet, die unterhalb von -20 °C, vorzugsweise unterhalb von -40 °C liegt. Die Kautschukteilchen weisen eine Teilchengröße auf, die unterhalb von 300 nm, vorzugsweise zwischen 40 und 250 nm, besonders bevorzugt zwischen 80 und 200 nm liegt. Diese Werte beziehen sich auf den $d_{50}$-Wert der integralen Massenverteilung, der beispielsweise mit Hilfe der Ultrazentrifuge bestimmt werden kann.

Als Emulgatoren werden im allgemeinen die üblichen anionischen Emulgatoren wie Alkylsulfate, Alkylsulfonate, Aralkylsulfonate, Seifen gesättigter oder ungesättigter Fettsäuren (z. B. Ölsäure, Stearinsäure), derer Oligomeren (z. B. Ölsäuredimer) sowie alkalischer disproportionierter oder hydrierter Abietin- oder Tallolsäure eingesetzt. Vorzugsweise werden Emulgatoren mit Carboxylgruppe(n) (z.B. Salze von $C_{10}$-$C_{18}$-Fettsäuren oder derer Oligomere, disproportionierte Abietinsäure, Emulgatoren gemäß DE-A 36 39 904 und DE-A 39 13 509) verwendet, besonders bevorzugt alkalische Salze eines gesättigten oder ungesättigten Oligomers einer ungesättigten aliphatischen Carbonsäure, ganz besonders bevorzugt Alkalisalze von Dimer- oder Trimerfettsäuren mit 24 bis 66 Kohlenstoffatomen eingesetzt. Gemische der obengenannten Emulgatoren können auch eingesetzt werden. Der Emulgatorgehalt beträgt 0,2 bis 6, bevorzugt 0,5 bis 2,5 Gewichtsprozent, bezogen auf den zu agglomerierenden Kautschuk.

Werden mehr als 50 Gew.-%, bezogen auf die Gesamtemulgator-Menge, Alkalisalze von Dimer- oder Trimerfettsäuren mit 24 bis 66 Kohlenstoffatomen verwendet, verläuft die Agglomeration mit den erfindungsgemäßen amphiphilen Verbindungen Koagulatfrei bzw. besonders Koagulatarm. Als Emulgator für die Herstellung des Latex können Alkalisalze von dimeren oder trimeren Fettsäuren oder deren Gemisch bis zu 50 Gew.-% anderer anionischer Emulgatoren, beispielsweise Carboxylatemulgatoren, verwendet werden.

Zur Viskositätsminderung bei der Herstellung der zu agglomerierenden Latices und zur Sensibilisierung der Agglomeration können die üblichen Salze, wie z. B. Natriumsulfat, Kaliumchlorid, Natriumpyrophosphat oder Alkalicarbonate in Mengen von 0,01 bis 1 Gew.-%, bzw. 0,1 bis 1 Gew.-%, bezogen auf den zu agglomerierenden Kautschuk, verwendet werden.

Die Herstellung von Kautschuken ist allgemein bekannt. Beispielhaft wird die Polybutadienpolymerisation mit thermisch zersetzbaren Radikalspendern wie z. B. Kaliumpersulfat oder mit Redox-Initiator-Systemen, wie sie dem Fachmann allgemein bekannt sind, initiiert. Die Polymerisationstemperatur liegt für Polybutadien im allgemeinen bei +5 bis +85 °C, vorzugsweise zwischen 40 und 70 °C.

Agglomerierbare Kautschuklatices weisen im allgemeinen einen Feststoffgehalt von 30 bis 50 Gew.-%, bevorzugt 35 bis 45 Gew.-%, auf. Besonders bevorzugt sind salz- und emulgatorarme engverteilte Dienlatices, die nach dem Saat-Zulauf-Verfahren mit 0.5 bis 2.5 Gewichtsprozent Emulgator und 0.1 bis 0.25 % Salz, bezogen auf Kautschuk, hergestellt worden sind. Bei Verwendung der erfindungsgemäßen Emulgator-Agglomeriermittel-Kombination gibt es keine Probleme bei der Herstellung von Pfropflatices und ABS.

Der Kautschuklatex wird durch Zugabe einer wasserhaltigen Lösung eines amphiphilen Block-Copolymers agglomeriert. Vorzugsweise werden wäßrige Lösungen von Block-Copolymeren auf Basis von Ethylenoxid eingesetzt. Die Block-Copolymere können unterschiedliche molekulare Strukturen aufweisen, wie z. B. linear, verzweigt, kammförmig oder sternförmig. Die amphiphilen Eigenschaften werden dadurch gewährleistet, dass die Block-Copolymere mindestens aus einem Segment mit hydrophobem Charakter und einem Segment mit hydrophilem Charakter bestehen.

Monomere, die zum hydrophoben Segment gehören können, sind alle gängigen hydrophoben Monomere.

Beispielhaft und bevorzugt seien genannt: Styrol, $\alpha$-Methylstyrol und deren kernsubstituierte Derivate; Olefine mit 3 bis 12 Kohlenstoffatomen, vorzugsweise Butadien und/oder Isopren; Alkylacrylate, Alkylmethacrylate, vorzugsweise $C_1$-$C_4$-Alkylacrylate, $C_1$-$C_4$-Alkylmethacrylate; Propylenoxid; Dimethylsiloxan, Phenylmethylsiloxan; aliphatische Hydroxycarbonsäuren, vorzugsweise mit 3 bis 8 Kohlenstoffatomen im Alkylrest; Ester von aromatischen oder aliphatischen Dicarbonsäuren, vorzugsweise aliphatischen Dicarbonsäuren mit 3 bis 12 Kohlenstoffatomen im Alkylrest oder Terephtalsäure, mit aliphatischen Diolen mit vorzugsweise 2-36, besonders bevorzugt 2-18 Kohlenstoffatomen im Alkylrest, insbesondere Ethylenglykol, Butandiol; Urethane aus aromatischen oder aliphatischen Diisocyanaten, vorzugsweise ausgewählt aus Toluoldiisocyanat, Hexamethylendiisocyanat, Isophorondiisocyanat und/oder Methylendiphenylendiisocyanat mit den genannten Diolen; oder Mischungen aus den genannten Monomeren. Das Hydrophobe Segment kann auch bis zu 20 Gew.-% anderer, d.h. hydrophiler Monomere enthalten.

Monomere, die zum hydrophilen Segment gehören können, sind alle gängigen hydrophilen Monomere. Beispielhaft und bevorzugt seien genannt: Ethylenoxid, Acrylamid, alkalische Salze von (Meth)Acrylsäure, Vinylpyrrolidon, N-, 2- und 4-Vinylpiridin, Ethylenimine, alkalische Salze von 4-Styrolsulfonsäure, Vinylalkohol, Dimethylaminoethyl(meth) acrylat, Hydroxyethyl(meth)acrylat. Das hydrophile Segment kann auch bis zu 30 Gew.-% anderer, d.h. hydrophobe Monomere, wie oben genannt, enthalten. Besonders bevorzugt besteht das hydrophile Segment aus 70 bis 100 Gew.-% Ethylenoxideinheiten und 30 bis 0 Gew.-% Propylenoxideinheiten.

Bevorzugt sind lineare Polystyrol-Polyethylenoxid Diblock-Copolymere und verzweigte Copolymere auf Polydimethylsiloxanbasis mit ethylenoxidhaltigen Seitenketten.

Die erfindungsgemäßen agglomerierenden Block-Copolymere sind dadurch charakterisiert, dass das Molekulargewicht HB des größten hydrophoben Segments des Copolymers mindestens 500 g/mol, bevorzugt mindestens 600 g/mol, beträgt und das Molgewicht HL des größten hydrophilen Segments mindestens 2000 g/mol, bevorzugt mindestens 2200 g/mol, beträgt. Bevorzugt werden wasserlösliche Verbindungen. Verbindungen, die diese Mindestwerte nicht erreichen, besitzen kaum bis gar keine agglomerierende Wirkung.

Das Molekulargewicht des hydrophoben Segmentes kann im allgemeinen bis zu 20 000 g/mol, vorzugsweise bis zu 10 000 betragen. Das Molekulargewicht des hydrophilen Segment beträgt im allgemeinen bis zu 100 000, vorzugsweise 50000, besonders bevorzugt bis zu 20 000 g/mol.

Die agglomerierende Lösung kann auch mehrere der genannten Block-Copolymere enthalten, ebenso deren Gemische mit bis zu 70 Gewichtsprozent anderer nichtagglomerierenden amphiphilen Verbindungen oder/und anionischer Emulgatoren.

Die Konzentration der Block-Copolymeren in der Agglomerierlösung soll im allgemeinen zwischen 1 und 50, bevorzugt zwischen 5 und 30 Gewichtsprozent liegen.

Die agglomerierende Lösung kann gegebenenfalls bis zu 50 Gewichtsprozent eines wassermischbaren organischen Lösungsmittels enthalten, wie beispielsweise und bevorzugt Methanol, Ethanol, Dioxan, Tetrahydrofuran, Pyridin, Aceton, Methylethylketon oder Acetonitril. Eine befriedigende Wirksamkeit des Agglomeriermittels wird erst dann erreicht, wenn eine homogene Lösung eingesetzt wird.

Die Agglomerierlösung kann sofort nach ihrer Herstellung eingesetzt werden. Wird sie mindestens 3 Tage zwischen 20 und 40°C altem gelassen, ist die Agglomeration allerdings reproduzierbarer, gleichmäßiger und die Koagulatbildung ist - falls zutreffend- reduziert. Am besten wird die agglomerierende Lösung eine Woche bei 40°C unter Rühren gealtert.

Bei der Agglomeration werden 0,01 bis 10, vorzugsweise 0,05 bis 5, insbesondere 0,05 bis 2 Gewichtsprozent Block-Copolymere, bezogen auf Kautschuk, eingesetzt. Die Agglomeration wird durch Zugabe der Agglomerierlösung zum Kautschuklatex durchgeführt. Die Zugabe findet innerhalb weniger Sekunden, bevorzugt in weniger als 60 Sekunden, unter ausreichender Durchmischung bei einer Temperatur zwischen im allgemeinen 5 und 70°C, vorzugsweise zwischen 10 und 60°C, insbesondere zwischen 10 und 50°C und ganz besonders bevorzugt zwischen 20 und 40°C, statt. Bei höheren Temperaturen als 70°C wird häufig die Koagulatbildung begünstigt. Die Agglomeration kann sowohl satzweise als auch kontinuierlich durchgeführt werden.

Nach Ende der Agglomeration können dem Agglomerat-Latex erforderlichenfalls zusätzliche Stabilisiermittel zugegeben werden, wie z.B. anionische Emulgatoren oder Antioxidantien. Man kann den Agglomerat-Latex auch thermisch oder mechanisch nachbehandeln, z. B. durch Erhitzen oder durch Homogenisiermaschinen.

### Beispiele

In allen Beispielen sind die Prozentwerte:

- im Latex: Gewichtsprozente bezogen auf den zu agglomerierenden Kautschuk.
- in den homogenen Lösungen: Gewichtsprozente bezogen auf die Gesamtlösung.

Die Teilchengröße der Ausgangs- und agglomerierten Latices werden mittels Laserkorrelationsspektroskopie (LKS) ermittelt (Spektrometer "ALV-5000 Multiple Tau digital Correlator", ALV-Laser Vertiebsgesellschaft mbH., Langen, Deutschland; Wellenlänge 633 nm, 90° Streuwinkel). Zusätzlich wurde die Teilchengrößenverteilung einiger Latices mittels Ultrazentrifugation oder spezifische Trübungsmessung (Dr. Lange Digital Photometer LP 1 W, Dr. Bruno Lange GmbH & Co. KG, Düsseldorf, Deutschland; Wellenlänge 535 nm) gemessen.

Für einige agglomerierten Latices wurde die Homogenität optisch mittels Dunkelfeldmikroskopie bewertet (Zeiss Standarddurchlichtmikroskop im Dunkelfeldmodus mit Polaroid Aufsatzkamera MC 63 und Polaroid Film Polaplan 57, Vergrößerungen 400 x und 1000 x, Einsatz von Immersionsöl zwischen Objektiv und Deckelglas für 1000 x Vergrößerung).

## Kautschuklatices

Die Polybutadienlatices wurden in einem VA-Stahl-Autoklav unter Stickstoff hergestellt. Die Polybutylacrylatlatices wurden in einem 2-L-Glaskolben unter Stickstoff polymerisiert.

Für alle Saat-Zulauf-Polymerisationen war der Saat-Latex ein engverteilter Polybutadienlatex mit mittlerer Teilchengröße $d_{50}$ 40 nm.

Wenn Redox-Initiatoren eingesetzt wurden, wurde zur Vorbereitung der Lösungen ausschließlich ausgekochtes, entionisiertes Wasser verwendet.

Herstellung eines Polybutadienlatex durch Saat-Zulauf-Verfahren: Latex 1

In einem 120 1 VA-Stahl-Autoklav werden unter Stickstoff 42 220 g entionisiertes Wasser, 3126 g Saatlatex (engverteilter Polybutadienlatex mit mittlerer Teilchengröße 40 nm und Feststoffgehalt 35.3 Gew.-%.), 804 g einer 7,5 gew.-%igen Lösung vom Kalium-Salz der Dimersäure "Pripol® 1008" (Fa. Unichema, Deutschland) und 48,3 g Natriumsulfat vorgelegt. Der Autoklav wird abgedichtet, es werden unter Rühren 4710 g 1,3-Butadien und 66 g tert.-Dodecylmercaptan eindosiert und der Kesselinhalt wird auf 50°C aufgeheizt. Wenn die Temperatur konstant ist, wird zuerst eine Lösung aus 9,6 g tert.-Butylhydroperoxid (80 %ig) und 480 g entionisiertem Wasser auf einmal zugegeben und gleich danach eine - unter Stickstoff vorbereitete - Lösung aus: 7,5 g Eisen(II)-Komplexonat Lösung (zusammengesetzt aus 13,464 g EDTA-di-Natriumsalz, 75,176 g NaOH 1M und 7,092 g $(NH_4)_2[Fe(SO_4)_2]*6H_2O$ auf 100 g Lösung), 6,5 g Natriumhydroxymethansulfinat (Dihydrat), 100 g ausgekochtes, entionisiertes Wasser auf einmal zugegeben. Es folgt eine exotherme Reaktion. Sobald die Innentemperatur ihr Maximum überschritten hat, werden gleichzeitig folgende Dosierströme gestartet:

A) Lösung aus 1560 g 1,3-Butadien und 199,8 g tert.-Dodecylmercaptan in 10 Stunden
B) 31 710 g Butadien in 20 Stunden
C) Lösung aus 38,4 g tert.-Butylhydroperoxid (80 %ig) und 2500 g entionisiertem Wasser
D) 9 418 g 7,5 Gew.-%igen Lösung vom Kalium-Salz der Dimersäure Pripol® 1008
E) Lösung aus 26 g Natriumhydroxymethansulfinatdihydrat und 2476 g entionisiertem Wasser

C), D), E), in 25 Stunden. Die Polymerisation wird abgebrochen, wenn der Druck auf 1,5 bar gefallen ist. Der Latex wird anschließend entgast und in einen Kunststoffbehälter umgefüllt.

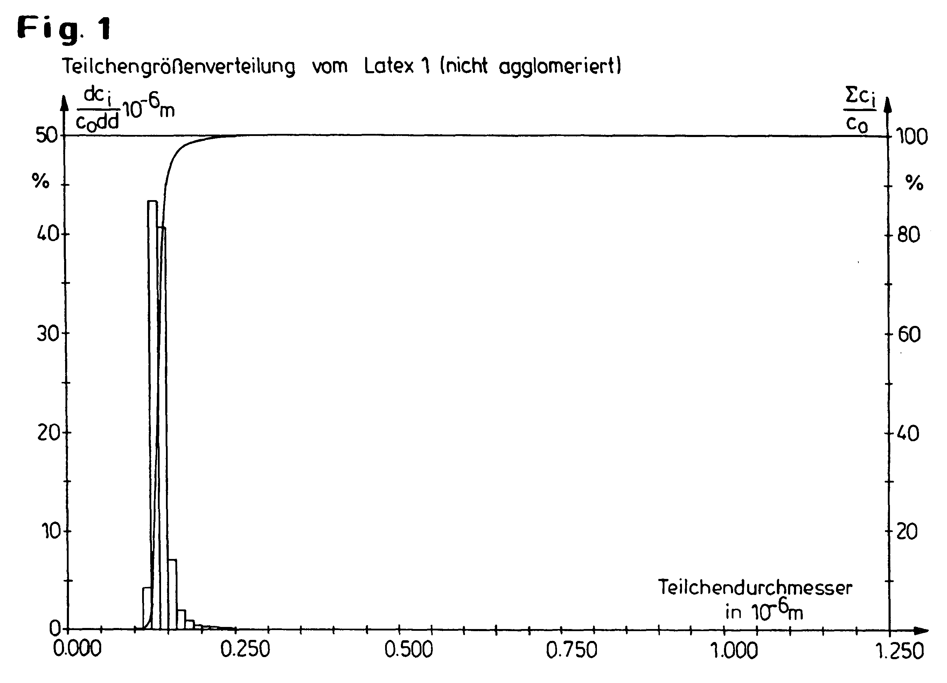

Man erhält 104 1 eines Polybutadienlatex mit 2,02 % Emulgator (K-Salz der hydrierten Dimersäure der Ölsäure "Pripol® 1008"), 0,13 % Natriumsulfat, mittlerem Teilchendurchmesser $d_{50}$ 142 nm und 39,8 Gew.-% Feststoffgehalt. Die integrale und differentiale Gewichtsverteilung der Teilchendurchmesser dieses Latex, gemessen durch Ultrazentrifugation, wird in Fig. 1 dargestellt.

Nach analogen Verfahren wurden die in Tab. I ausgeführten Latices 1 bis 8 hergestellt. Alle zeigten ähnliche engverteilten Teilchengrößenverteilungen gemäß Ultrazentrifugation.

Herstellung eines Polybutadienlatex durch Batch-Verfahren: Latex 9

In einem 40 1 VA-Stahl-Autoklav werden unter Stickstoff 12255,8 g entionisiertes Wasser, 3678,9 g einer 10 Gew.-%igen Lösung von Kaliumoleat, 162,6 g Kalilauge 1 N, 62,74 g tetra-Natriumdiphosphat, 21,02 g Kaliumpersulfat und 52,55 g tert.-Dodecylmercaptan vorgelegt. Der Autoklav wird abgedichtet, es werden unter Rühren 10511,1 g 1,3-Butadien eindosiert und der Kesselinhalt wird auf 54 °C aufgeheizt. Sobald die Temperatur erreicht ist, wird der Zeitpunkt als Fahrstunde 0 festgelegt. Es wird folgendes Temperaturprofil gefahren:

| Fahrstunde (h) | Temperatur (°C) |
|---|---|
| 2,5 | 54,5 |

(fortgesetzt)

| Fahrstunde (h) | Temperatur (°C) |
|---|---|
| 4,5 | 55 |
| 12 | 56 |
| 13 | 61 |
| 14 | 64 |
| 15 | 71 |
| 16 | 74 |

Die Polymerisation wird abgebrochen, wenn der Druck auf 2 bar gefallen ist. Der Latex wird anschließend entgast und in einen Kunststoffbehälter umgefüllt.

Man erhält 341 eines Polybutadienlatex mit 3,50 % Kaliumoleat, 0,6 % Natriumdiphosphat, mittlerem Teilchendurchmesser $d_{50}$ 64 nm und $d_{LKS}$ = 95 nm und 41,1 Gew.-% Feststoffgehalt.

Herstellung eines Polybutylacrylatlatex durch Saat-Zulauf-Verfahren: Latex 10

In einem 4 1 Glaskolben werden 405,1 g entionisiertes Wasser, 89,3 g Saatlatex (engverteilter Polybutadienlatex mit mittlerer Teilchengröße 40 nm und Feststoffgehalt 35.3 Gew.-%.), 77,7 g einer 10 Gew.-%igen Lösung vom Kalium-Salz der Dimersäure "Pripol® 1013" (Fa. Unichema, Deutschland) und 0,65 g Natriumsulfat vorgelegt. Es werden unter Rühren 88,7g n-Butylacrylat eindosiert und der Reaktorinhalt wird auf 80°C aufgeheizt. Wenn die Temperatur konstant ist, wird eine Lösung aus 0,73 g Kaliumpersulfat, 5,61 g Natronlauge 1 N und 30,7 g entionisiertem Wasser auf einmal zugegeben Danach werden gleichzeitig folgende Dosierströme gestartet:

F) Lösung aus 114,8 g 10 gew.-%igen Lösung vom Kalium-Salz der Dimersäure "Pripol® 1008", 0,65 g Natriumsulfat, 2,17 g Kaliumpersulfat, 20 g Natronlauge 1 N und 778,2 g entionisertem Wasser

G) 874,3 g n-Butylacrylat

und in 4 Stunden zudosiert.

Nach Ende der Dosierungen wird der Reaktorinhalt noch 2 Stunden bei 80°C gerührt und anschließend abgekühlt. Der Latex wird in einen Kunststoffbehälter umgefüllt.

Man erhält 2,5 1 eines Polybutylacrylatlatex mit 2 % Emulgator (K-Salz der hydrierten Dimersäure der Ölsäure "Pripol® 1008"), 0,13 % Natriumsulfat, mittlerem Teilchendurchmesser 144 nm und 40,9 Gew.-% Feststoffgehalt.

Nach analogen Verfahren wurden die in Tab. II ausgeführten Latices 10 bis 12 hergestellt.

**Tabelle I**

| Late x N° | Gew.-%. Feststoff | pH-Wert | Teilchengröße (nm) | Initiator Art | Menge[1] | Regler Art | Menge[1] | Emulgator Art | Menge[1] | Elektrolyt Art | Menge[1] | Polym.-Zeit (h) | Polym.-Temp (°C) |
|---|---|---|---|---|---|---|---|---|---|---|---|---|---|
| 1 | 39,8 | 9,3 | 142 | Redox | 0,19 | t-DDM | 0,7 | K-1008 | 2,02 | $Na_2SO_4$ | 0,13 | 35 | 50 |
| 2 | 40,3 | 12,2 | 134 | KPS | 0,30 | 50-50* | 0,7 | K-1013 | 1,25 | $Na_2SO_4$ | 0,13 | 35 | 58-69 |
| 3 | 40,0 | 9,3 | 143 | Redox | 0,19 | t-DDM | 0,7 | K-Oleat | 2,02 | $Na_2SO_4$ | 0,13 | 34 | 50 |
| 4 | 40,1 | 9,1 | 145 | Redox | 0,19 | t-DDM | 0,7 | K-Palmitat | 2,02 | $Na_2SO_4$ | 0,13 | 37 | 50 |
| 5 | 40,1 | 11,2 | 128 | KPS | 0,25 | 50-50* | 0,6 | T11 | 2,00 | $Na_2SO_4$ | 0,13 | 11 | 80-85 |
| 6 | 41,1 | 11,9 | 132 | KPS | 0,30 | t-DDM | 0,6 | Dresinate | 1,74 | $Na_2SO_4$ | 0,13 | 35 | 58-69 |
| 7 | 40,2 | 12,8 | 129 | KPS | 0,3 | 50-50* | 0,7 | K-Laurat | 1,50 | $Na_2SO_4$ | 0,13 | 33 | 58-69 |
| 8 | 41,1 | 11,2 | 199 | KPS | 0,07 | t-DDM | 0,5 | Dresinate | 1,00 | - | - | 36 | 65-75 |
| 9 | 41,1 | 11,2 | 95 | KPS | 0,20 | t-DDM | 0,5 | K-Oleat | 3,50 | $Na_2H_2PO_4$ | 0,6 | 18 | 54-74 |

Tabelle II

| Latex N° | Gew.-%. Feststoff | pH-Wert | Teilchengröße (nm) | Initiator Art Menge[1] | | Regler Art Menge[1] | | Emulgator Art Menge[1] | | Elektrolyt Art Menge[1] | | Polym.-Zeit (h) | Polym.-Temp (°C) |
|---|---|---|---|---|---|---|---|---|---|---|---|---|---|
| 10 | 40,9 | 7,7 | 144 | KPS | 0,3 | - | - | K-1008 | 2,00 | $Na_2SO_4$ | 0,13 | 6 | 80 |
| 11 | 39,5 | 8,1 | 144 | KPS | 0,3 | - | - | Dresinate | 2,00 | $Na_2SO_4$ | 0,13 | 6 | 80 |
| 12 | 38,3 | n.b. | 95 | KPS | 0,3 | - | - | Mersolat | 2,00 | $Na_2SO_4$ | 0,13 | 6 | 80 |

K-1008 und K-1013 : Kalium-Salz des kommerziellen Ölsäuredimers "Pripol® 1008" bzw. "Pripol® 1013" (Produkte der Unichema Chemie GmbH, Emmerich, Deutschland) T11: Natrium-Salz eines Gemischs aus gesättigten und einfach ungesättigten Fettsäuren mit 12 bis 18 Kohlenstoffatomen (Säurezahl 204 mg KOH/g), (Produkt von Procter & Gamble, USA) Dresinate: Kalium-Salz einer disproportionnierten Abietinsäure (Produkt der Abieta Chemie GmbH, Gersthofen, Deutschland) KPS: Kaliumpersulfat Redox: Eisen (II)-EDTA-Komplexonat, Natriumhydroxymethansulfinat, t-Butylhydroperoxid (Molverhältnis $6,5*10^{-3}$: 1: 2)

t-DDM: tert-Dodecylmercaptan; n-DDM: n-Dodecylmercaptan

[*]: Gemisch aus 50 Gew.-Teile t-DDM und 50 Gew.-Teile n-DDM

[1]: Gew.-%. bezogen auf Kautschuk

**Amphiphile Verbindungen als Agglomeriermittel**

**Verbindung I**

LB 25 : ein auf Butyldiglykol gestarteter Polyether mit einem Mittelblock aus 15,6 % Propylenoxid (PO) sowie 63,5 % Ethylenoxid (EO), endverkappt mit 20,9 % EO; mittl. Molgew.(Gewichtsmittel): 2200 (Produkt der Bayer AG)

**Verbindung II**

Borchigen SN 95: Umsetzungsprodukt vom trimeren Toluoldiisocyanat mit LB 25 und Dimethylaminoethanol im molaren Verhältnis 2:1, Handelsprodukt der Bayer AG

**Verbindung III**

VP SE 1030: lineares Block-Copolymer aus einem Polystyrol-Block mit mittlerem Molgewicht 1000 g/mol und einem Polyethylenoxid-Block mit mittlerem Molgewicht 3000 g/mol (Produkt der Goldschmidt AG, Essen, Deutschland)

**Verbindung IV**

VP ME 1030: lineares Block-Copolymer aus einem Polymethylmethacrylat-Block mit mittlerem Molgewicht 1000 g/mol und einem Polyethylenoxid-Block mit mittlerem Molgewicht 3000 g/mol (Goldschmidt AG, Essen, Deutschland)

**Verbindung V**

VP BE 1030: lineares Block-Copolymer aus einem Poly-n-Butylacrylat-Block mit mittlerem Molgewicht 1000 g/mol und einem Polyethylenoxid-Block mit mittlerem Molgewicht 3000 g/mol (Produkt der Goldschmidt AG)

**Verbindung VI**

VP SE 1010: lineares Block-Copolymer aus einem Polystyrol-Block mit mittlerem Molgewicht 1000 g/mol und einem Polyethylenoxid-Block mit mittlerem Molgewicht 1000 g/mol (Produkt der Goldschmidt AG)

**Verbindung VII**

30 g (0,15 mol NCO) Desmodur® N 3300 (Trimerisiertes Hexamethylendiisocyanat; Funktionalität: 3,8, Produkt der Bayer AG) und 14,7 g (0,05 mol OH) Baysilon® OF-OH 502 6 % (ein über alkoholische OH- Gruppen verfügendes Dimethyl polysiloxan; Funktionalität = 2; 6 % OH; Produkt der Bayer AG) werden bei 80°C für 3 Stunden gerührt. Dann werden 224 g (0,1 mol OH) LB 25 zugegeben und so lange bei gleicher Temperatur weiter gerührt, bis der Ansatz NCO-frei ist (keine NCO-Bande mehr (2263-2275 cm$^{-1}$) im IR- Spektrum). Die erhaltene Substanz ist gut wasserdispergierbar.

**Verbindung VIII**

30 g (0.15 mol NCO) Desmodur® N 3300 und 42,5 g (0,05 mol OH) PE 170 HN (Polyester aus Adipinsäure und Hexandiol sowie Neopentylglykol mit mittlerem Molgewicht = 1700; Funktionalität = 2; Produkt der Bayer AG) werden bei 80°C für 3 Stunden gerührt. Dann werden 224 g (0,1 mol OH) LB 25 zugegeben und so lange bei gleicher Temperatur weiter gerührt, bis der Ansatz NCO-frei ist. Die erhaltene Substanz ist gut wasserdispergierbar.

**Verbindung IX**

30 g (0,15 mol NCO) Desmodur® N 3300 und 42,5 g (0,05 mol OH) PE 170 HN werden bei 80°C für 3 Stunden gerührt. Dann werden 35 g (0,1 mol OH) Carbowax 350 (Methoxypolyethylenglykol mit mittleren Molgewicht = 350; Produkt der Bayer AG) zugegeben und so lange bei gleicher Temperatur weiter gerührt, bis der Ansatz NCO-frei ist. Die erhaltene Substanz ist gut wasserdispergierbar.

**Verbindung X**

30,4 g (0,10 mol NCO) Sovermol DDI (Dimeryldiisocyanat, Produkt der Henkel KGaA, Düsseldorf, Deutschland;

Mittleres Molgewicht 190 g/mol; NCO = 13,8 %), 224 g (0,1 mol OH) LB 25 und 0,05 g Dibutylphosphorsäure werden vermischt und bei 80°C gerührt bis der Ansatz NCO-frei ist. Die erhaltene Substanz ist wasserlöslich.

### Verbindung XI

P1557-BdEO: lineares Block-Copolymer aus einem Poly(1,4-Butadien)-Block mit mittlerem Molgewicht 5000 g/mol und einem Polyethylenoxid-Block mit mittlerem Molgewicht 6000 g/mol (Produkt der Polymer Source, Inc, 771 Lajoie, Montreal, Quebec, Canada H9P 1 G7)

### Verbindung XII

P914-SANa: lineares Block-Copolymer aus einem Polystyrol-Block mit mittlerem Molgewicht 4100 g/mol und einem Poly(Natriumacrylat)-Block mit mittlerem Molgewicht 3200 g/mol (Produkt der Polymer Source, Inc)

### Verbindung XIII

P1037-S4VP: lineares Block-Copolymer aus einem Polystyrol-Block mit mittlerem Molgewicht 3300 g/mol und einem Poly(4-Vinylpyridin)-Block mit mittlerem Molgewicht 4750 g/mol (Produkt der Polymer Source, Inc). Diese Verbindung ist nur unter Zusatz von Säure (0,5 ml HCl IN auf 0,5 g P1037-S4VP) wasserlöslich.

### Verbindung XIV

**P1358-StAMD:** lineares Block-Copolymer aus einem Polystyrol-Block mit mittlerem Molgewicht 16400 g/mol und einem Polyamid-Block mit mittlerem Molgewicht 4000 g/mol (Produkt der Polymer Source, Inc).

### Agglomeration von Kautschuklatices

Beispiel einer batchweisen Agglomeration: Beispiel 1

In einem 250 ml Becherglas werden 100 ml Latex 1 vorgelegt. Dem Latex werden dann unter Rühren auf einmal 3 ml einer 8 %-igen Lösung der Verbindung II zugegeben. Die Agglomeration erfolgt innerhalb weniger Sekunden. Nach 10 Minuten Nachrührzeit wird der Latex filtriert und in eine 100 mL PE-Flasche umgefüllt. Es wirde keine Koagulatbildung festgestellt.

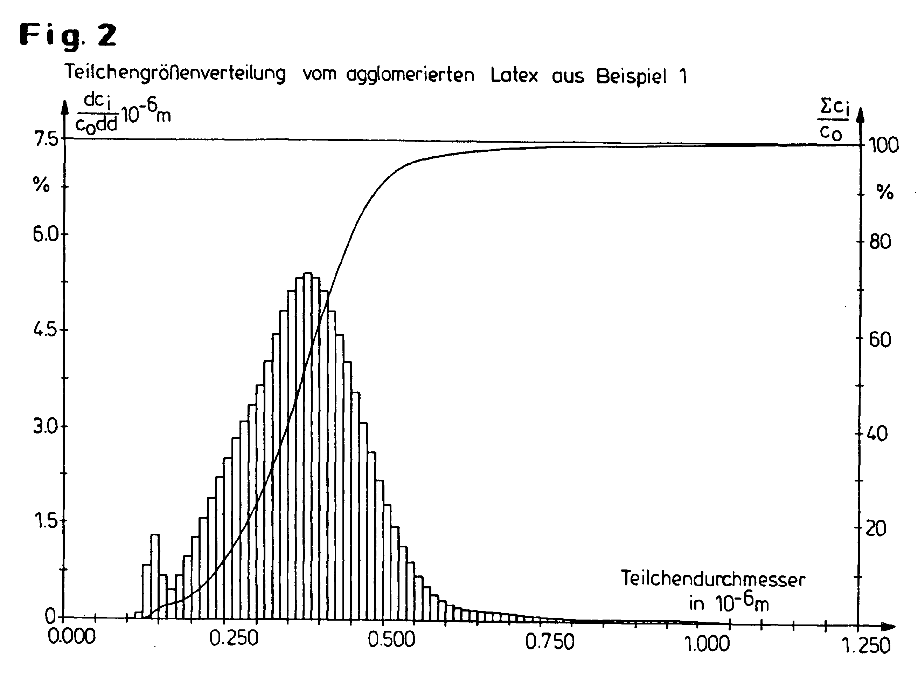

Man erhält 100 ml eines engverteilten agglomerierten Latex mit mittlerer Teilchengröße 488 nm (LKS), 39,1 Gew.-% Feststoffgehalt, der nach einem Monat Lagerzeit bei Raumtemperatur unverändert bleibt. Die integrale und differentiale Gewichtsverteilung der Teilchendurchmesser dieses Latex, gemessen durch Ultrazentrifugation, wird in Fig. 2 dargestellt.

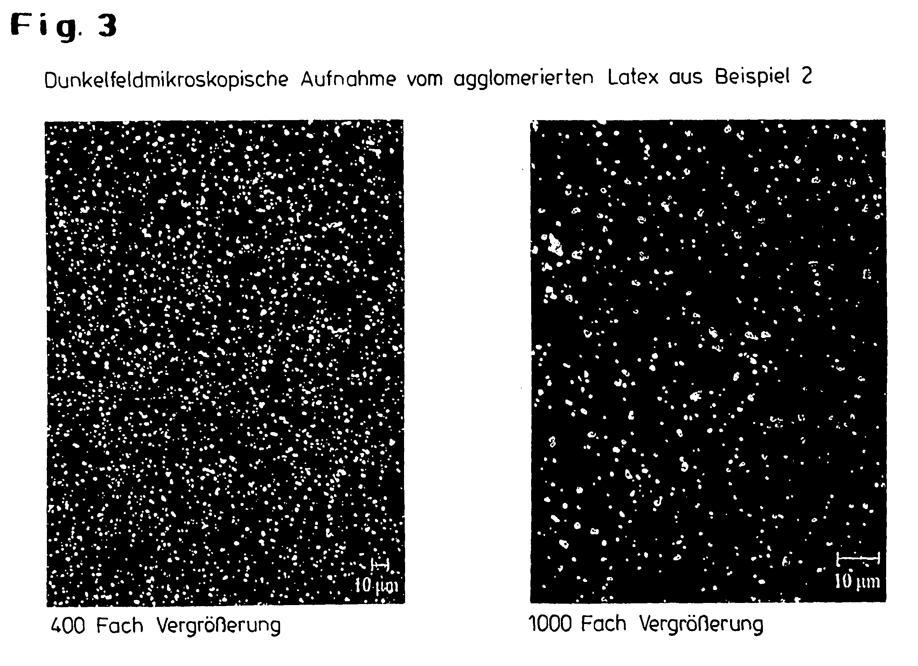

Analog zum Beispiel 1 wurden die in Tab. III, Spalte 2 ausgeführten Latices mit den in Tab. III, Spalte 8 angegebenen Agglomeriermitteln und der in Spalte 10 ausgeführten Agglomeriermittelkonzentration versuchsweise agglomeriert. Die Eigenschaften der Agglomeratlatices sind in Spalten 12 bis 14 ausgeführt. Typische Dunkelfeldmikroskopische Aufnahmen werden für den agglomerierten Latex von Beispiel 2 in Fig. 3 abgebildet.

Beispiel einer kontinuierlichen Agglomeration: Beispiel 19

Pro Stunde werden in einem Statikmischer (6 mm Durchmesser, 12 mm Länge) 60 L Latex 1 mit 12 L einer 1 %igen Lösung der Verbindung II kontinuierlich durchmischt. Der agglomerierte Latex wird in einer gerührten Vorlage gesammelt. Es wird keine Koagulatbildung festgestellt.

Man erhält einen agglomerierten Latex mit mittlerer Teilchengröße 320 nm, 32,9 Gew.-% Feststoffgehalt.

### Erläuterung der Beispiele

Aus Tab. III ist zu entnehmen, siehe Beispiele Nr. 1 bis Nr. 8 sowie Beispiel 37, dass bei Verwendung von Dimerseifen (Pripol[®] 1008 und Pripol[®] 1013, K-Salze) im Primärlatex und nach Zusatz erfindungsgemäßer Agglomeriermittel (Blockamphiphilen) meist koagulatfreie Agglomeratlatices mit dem gewünschten mittlerem Teilchendurchmesser, ca. 300-600 nm, entstehen. Besonders vorteilhaft wirken die Agglomeriermittel II, III, VII, VIII.

Ist das amphiphile Agglomeriermittel nicht erfindungsgemäß, siehe Vergleichsbeispiele V9 bis V12, so tritt praktisch keine Agglomeration des Latex ein: die Blockverbindungen VI, IX, X und I erweisen sich als unwirksam, sie besitzen nicht die geeignete Struktur. Sinngemäß weisen die "Agglomerat"-Latices nur unwesentlich größere mittlere Durchmesser auf. Koagulatbildung tritt bei Zusatz von VI, IX, X, und I nicht auf.

Wird ein bei Dimerseifen-Primärlatices wirksames Agglomeriermittel (Hier Verbindung II: Borchigen SN 95) zu Agglomerationsversuchen mit K-Oleat (Beispiel 13), Harzseife Dresinate (Beispiel 14), K-Palmitat (Beispiel 15), K-Laurat (Beispiele 16 und 19), Talgfettsaurem Kali T11 (Beispiel 17) hergestellten Primärlatices vergleichbarer Teilchengrößen eingesetzt, so kann viel Koagulat (10 bis 60 %) entstehen. Solche massive Koagulatbildung kommt mit den mit Dimerseifen hergestellten Latices nicht vor. Darüber hinaus zeigen die Latices aus Beispielen 13 bis 17 nach Abfiltrieren bzw. Absieben des groben Koagulats eine praktisch unveränderte Teilchengröße gegenüber den Primärlatices.

In den Fällen wo der Emulgator keine Dimer- oder Trimerfettsäure ist, müssen die Agglomerationsbedingungen genauer angepaßt werden, damit die Koagulatbildung minimiert werden kann. Die Koagulatbildung kann unter anderen reduziert werden durch:

- eine Verdünnung der Agglomerierlösung (vgl Beispiele 18 und 19)
- eine Anhebung der Agglomerationstemperatur (z. B. kann bei 50°C weniger Koagulat gebildet werden als bei 20 °C, vgl. Beispiele 20 und 21), allerdings nicht oberhalb von 70°C
- eine Anpassung der Struktur des Agglomeriermittels (z. B. es kann weniger Koagulat gebildet werden, wenn der hydrophobe Block der amphiphile Verbindung auf Basis von Polysiloxan hergestellt wird, vgl. Beispiele 15 und 22)
- die Zugabe, vor der Agglomeration, von zusätzlichem Emulgator zum Ausgangslatex (vgl. Beispiele 20, 23 und 24)
- den Einsatz von einem Gemisch aus Agglomeriermittel und Emulgator (z. B. ein Gemisch aus 80 Gew.-% amphiphiles Copolymer und 20 Gew.-% K-Oleat, vgl. Beispiele 13 und 25)
- eine Änderung des pH-Wertes des Latex (vgl. Beispiele 26 und 27)
- die Verbesserung der Durchmischung von Latex und Agglomerierlösung (solange dies ohne excessive Scherung des Latex möglich ist, sonst enstehen wieder große Koagulatmengen)

Die Verdünnung vom Ausgangslatex und/oder die Zugabe von zusätzlichem Emulgator kann zur Bildung von kleineren Agglomerierten Teilchen rühren; in solchen Fällen kann die Teilchengröße durch eine leichte Anhebung der Salzkonzentration (z.B. Zugabe von 0,5 Gew.-% $Na_2SO_4$, vgl. Beispiele 26 und 28) ohne Bildung von größeren Koagulatmengen vergrößert werden.

Nicht nur Polybutadienlatices können mit dem erfindungsgemäßen Verfahren agglomeriert werden, sondern Kautschuklatices im allgemeinen sind zur Agglomeration nach diesem Verfahren geeignet, wie die Beispiele 29 bis 35 auf Basis von Poly(n-Butylacrylat)latices zeigen.

Die Beispiele 32 bis 35 zeigen auch, dass amphiphile Copolymere mit hydrophilen Segmenten, die eine nicht auf Ethylenoxid basierende Struktur aufweisen, ebenfalls zur Agglomeration geeignet sind.

Aus Beispiele 31 bis 35 ist zu sehen, dass Latices, die mit Sulfonatemulgatoren hergestellt werden, mit dem erfindungsgemäßen Verfahren agglomeriert werden können. Das erfindungsgemäße Verfahren ist also nicht auf Carboxylatemulgatoren alleine angewiesen.

Wird ein nicht erfindungsgemäßes Agglomeriermittel (wie VI) zur Agglomeration eines empfindlicheren Latex auf Basis von anderen Emulgatoren als eine Dimer oder Trimerseife eingesetzt, bleibt der Effekt der Teilchenvergrößerung unbefriedigend und es bildet sich etwas Koagulat (Vergleichsbeispiel V36, Emulgator Harzsäure).

**Tabelle III**

| Bsp.-Nr. | Latex Nr. | Aktiviert mit | Emulgator | Teilchengröße, nm | Feststoff Gew.-%. | Menge, ml | Nr. | Menge, ml | Konz., Gew.-%. | %, bez. a. Feststoff | Teilchengröße, nm | Feststoff Gew.-%. | Koagulat Gew.-%. |
|---|---|---|---|---|---|---|---|---|---|---|---|---|---|
| ① | | | | | | | | | | ⑪ | ⑫ | ⑬ | ⑭ |
| | Ausgangslatex (vgl. Tab. I) | | | | | | Agglomerierende Verb. | | | | Agglomeratlatex | | |
| 1 | 1 | Redox | K-Pripol 1008 | 142 | 39,8 | 100 | II | 3 | 8 | 0,60 | 450 | 39,1 | 0 |
| 2 | 1 | Redox | K-Pripol 1008 | 142 | 39,8 | 50 | II | 0,5 | 8 | 0,20 | 540 | 39,5 | 0 |
| 3 | 2 | KPS | K-Pripol 1013 | 134 | 40,3 | 5000 | II | 30 | 8 | 0,12 | 360 | 39,0 | 3,5 |
| 4 | 2 | KPS | K-Pripol 1013 | 134 | 40,3 | 5000 | III | 30 | 10 | 0,15 | 630 | 39,8 | 0 |
| 5 | 1 | Redox | K-Pripol 1008 | 142 | 39,8 | 50 | VII | 0,5 | 10 | 0,25 | 354 | 39,5 | 0 |
| 6 | 1 | Redox | K-Pripol 1008 | 142 | 39,8 | 50 | VIII | 0,5 | 10 | 0,25 | 476 | 39,5 | 0 |
| 7 | 1 | Redox | K-Pripol 1008 | 142 | 39,8 | 50 | IV | 0,5 | 10 | 0,25 | 219 | ca. 39 | 0 |
| 8 | 1 | Redox | K-Pripol 1008 | 142 | 39,8 | 50 | V | 0,5 | 10 | 0,25 | 208 | ca. 39 | 0 |
| V.9 | 1 | Redox | K-Pripol 1008 | 142 | 39,8 | 50 | VI | 0,5 | 10 | 0,25 | 148 | 39,5 | 0 |
| V.10 | 1 | Redox | K-Pripol 1008 | 142 | 39,8 | 50 | IX | 0,5 | 10 | 0,25 | 152 | 39,5 | 0 |
| V.11 | 1 | Redox | K-Pripol 1008 | 142 | 39,8 | 50 | X | 0,5 | 10 | 0,25 | 176 | 39,3 | 0 |
| V.12 | 1 | Redox | K-Pripol 1008 | 142 | 39,8 | 50 | I | 0,5 | 10 | 0,25 | 146 | 39,5 | 0 |
| 13 | 3 | Redox | K-Oleat | 143 | 40,0 | 50 | II | 0,6 | 8 | 0,24 | 246 | 32 | 50 |

| ① | | | | | | | | | | ⑪ | | ⑫ | ⑬ | ⑭ |
|---|---|---|---|---|---|---|---|---|---|---|---|---|---|---|
| | Ausgangslatex (vgl. Tab. I) | | | | | | Agglomerierende Verb. | | | | | Agglomeratlatex | | |
| Bsp.-Nr. | Latex Nr. | Aktiviert mit | Emulgator | Teilchengröße, nm | Feststoff Gew.-%. | Menge, ml | Nr. | Menge, ml | Konz., Gew.-%. | %, bez. a. Feststoff | | Teilchengröße, nm | Feststoff Gew.-%. | Koagulat Gew.-%. |
| 14 | 6 | KPS | Na-Dresinate | 132 | 41,1 | 50 | II | 0,6 | 8 | 0,23 | | 138 | 36,8 | 31 |
| 15 | 4 | Redox | K-Palmitat | 145 | 40,1 | 50 | II | 0,6 | 8 | 0,24 | | 216 | 30,6 | 56 |
| 16 | 7 | KPS | K-Laurat | 129 | 40,2 | 50 | II | 0,6 | 8 | 0,24 | | 135 | 36,5 | 21 |
| 17 | 5 | KPS | K-T11 | 128 | 40,1 | 50 | II | 0,6 | 8 | 0,24 | | 151 | 33,3 | 57 |
| 18 | 9 | KPS | K-Oleat | 64 | 41,1 | 50 | VII | 1,0 | 10 | 0,5 | | 403 | 11 | - |
| 19 | 9 | KPS | K-Oleat | 64 | 41,1 | 50 | VII | 5,0 | 2 | 0,5 | | 410 | 0,4 | Verdünnte Aggl-Lsg |
| 20 | 7 | KPS | K-Laurat | 129 | 40,2 | 50 | III | 0,5 | 10 | 0,25 | | 270 | 22 | - |
| 21 | 7 | KPS | K-Laurat | 129 | 40,2 | 50 | III | 0,5 | 10 | 0,25 | | 270 | <0,5 | T=50°C |
| 22 | 4 | Redox | K-Palmitat | 145 | 40,1 | 50 | VII | 0,5 | 10 | 0,25 | | 332 | 0 | - |
| 23 | 7 | KPS | K-Laurat | 129 | 40,2 | 50 | III | 0,5 | 10 | 0,25 | | 250 | 0 | Latex+0,25% Pripol 1008 |
| 24 | 7 | KPS | K-Laurat | 129 | 40,2 | 50 | III | 0,5 | 10 | 0,25 | | 360 | 0 | Latex+0,5% K-Laurat |
| 25 | 3 | Redox | K-Oleat | 143 | 40,0 | 50 | II++ | 0,6 | 6,7 | 0,20 | | 450 | 0 | II++: Stammlösung aus 5 ml II 8% + 1 ml K-Oleat 10% |
| 26 | 8 | KPS | Na-Dresinate | 199 | 41,1 | 50 | VII | 1,0 | 10 | 0,5 | | 250 | <0,1 | Latex+ 4 ml Wasser |
| 27 | 8 | KPS | Na-Dresinate | 199 | 41,1 | 50 | VII | 1,0 | 10 | 0,5 | | 310 | 1,1 | pH=10 mit $H_2SO_4$ justiert |
| 28 | 8 | KPS | Na-Dresinate | 199 | 41,1 | 50 | VII | 1,0 | 10 | 0,5 | | 470** | <0,1 | Latex + 4 ml $Na_2SO_4$ 0,5% |
| 29 | 10 | KPS | K-Pripol 1008 | 144 | 40,9 | 50 | VII | 0,5 | 10 | 0,25 | | 268 | 0 | - |

13

EP 1 265 932 B1

| ① | | | | | | | | | | ⑪ | | ⑫ | | ⑬ | ⑭ |
|---|---|---|---|---|---|---|---|---|---|---|---|---|---|---|---|
| | Ausgangslatex (vgl. Tab. I) | | | | | | | Agglomerierende Verb. | | | | Agglomeratlatex | | | |
| Bsp.-Nr. | Latex Nr. | Aktiviert mit | Emulgator | Teilchengröße, nm | Feststoff Gew.-%. | Menge, ml | Nr. | Menge, ml | Konz., Gew.-%. | %, bez. a. Feststoff | | Teilchengröße, nm | Feststoff Gew.-%. | Koagulat Gew.-%. | |
| 30 | 11 | KPS | Na-Dresinate | 144 | 39,5 | 50 | VII | 0,5 | 10 | 0,25 | | 416 | 0 | - | |
| 31 | 12 | KPS | K-Mersolat | 95 | 38,3 | 50 | VII | 0,5 | 10 | 0,26 | | 300 | <0,1 | - | |
| 32 | 12 | KPS | K-Mersolat | 91*** | 38,3 | 12,5 | XI | 1 | 5 | 1,04 | | 265*** | 0 | - | |
| 33 | 12 | KPS | K-Mersolat | 91*** | 38,3 | 12,5 | XII | 2 | 0,25 | 1,04 | | 147*** | 0 | - | |
| 34 | 12 | KPS | K-Mersolat | 91*** | 38,3 | 12,5 | XIII | 2 | 0,27 | 1,13 | | 226*** | 20 | - | |
| 35 | 12 | KPS | K-Mersolat | 91*** | 38,3 | 12,5 | XIV | 2 | 0,25 | 1,04 | | 215*** | 0 | - | |
| V.36 | 6 | KPS | Na-Dresinate | 132 | 41,1 | 50 | VI | 0,5 | 10 | 0,24 | | 162 | 1 | - | |
| 37 | 1 | Redox | K-Pripol 1008 | 142 | 39,8 | 60000 | II | 12000 | 1 | 0,50 | | 320 | 0 | - | |

*: V.: Vergleichsbeispiel, nicht erfindungsgemäß;

** : Trübungsmessung;

***: Lichtstreuung mit Messwinkel 30°

EP 1 265 932 B1

**Patentansprüche**

1. Verfahren zur Agglomeration von feinteiligen Kautschuklatices durch Zugabe einer wasserhaltigen Lösung eines wasserlöslichen amphiphilen Block-Copolymers, bestehend aus mindestens einem hydrophilen Segment und mindestens einem hydrophoben Segment, **dadurch gekennzeichnet,**
**dass** das Molgewicht HB des größten hydrophoben Segments und das Molgewicht HL des größten hydrophilen Segments des amphiphilen Block-Copolymers folgende Mindestwerte überschreiten:

$$HB > 500 \ g/mol$$

und

$$HL > 2000 \ g/mol.$$

2. Verfahren nach Anspruch 1, **dadurch gekennzeichnet, dass** das hydrophile Segment des Block-Copolymeres aus Ethylenoxid, Acrylamid, alkalische Salze von (Meth)Acrylsäure, Vinylpyrrolidon, N-,2- und 4-Vinylpiridin, Ethylenimine, alkalische Salze von 4-Styrolsulfonsäure, Vinylalkohol, Dimethylaminoethyl(meth)acrylat, Hydroxyethyl (meth)acrylat; einem Gemisch dieser Monomere; oder einem Gemisch aus einem oder mehreren der genannten hydrophilen Monomeren mit bis zu 30 Gewichtsprozent hydrophober Monomerer besteht.

3. Verfahren nach einem oder beiden Ansprüchen 1 oder 2, **dadurch gekennzeichnet, dass** das hydrophobe Segment des Block-Copolymeres aus mindestens einem hydrophoben Monomeren ausgewählt aus der Gruppe bestehend aus: Styrol, $\alpha$-Methylstyrol und deren kernsubstituierte Derivate; Olefine mit 3 bis 12 Kohlenstoffatomen; Alkylacrylate, Alkylmethacrylate; Propylenoxid; Dimethylsiloxan, Phenylmethylsiloxan; aliphatische Hydroxycarbonsäuren,; Ester von aromatischen oder aliphatischen Dicarbonsäuren mit aliphatischen Diolen; Urethane aus aromatischen oder aliphatischen Diisocyanaten mit aliphatischen Diolen; besteht.

4. Verfahren nach einem oder mehreren Ansprüchen 1 bis 3, **dadurch gekennzeichnet, dass** als Emulgator für den zu agglomerierenden Latex Alkalisalze von dimeren oder trimeren Fettsäuren oder deren Gemisch mit bis zu 50 % anderer anionischer Emulgatoren verwendet werden.

5. Verfahren nach einem oder mehreren Ansprüchen 1 bis 4, **dadurch gekennzeichnet, dass** als Emulgator für den zu agglomerierenden Latex ein alkalisches Salz eines gesättigten oder ungesättigten Dimers einer ungesättigten aliphatischen Carbonsäure verwendet wird.

6. Verfahren nach einem oder mehreren Ansprüchen 1 bis 5, **dadurch gekennzeichnet, dass** die Agglomeration in kontinuierlicher Fahrweise betrieben wird.

7. Verwendung der nach einem oder mehreren Ansprüchen 1 bis 6 hergestellten grobteiligen Kautschuklatices für die Herstellung von schlagzähen, thermoplastisch verarbeitbaren Formmassen.

8. Verfahren zur Herstellung eines grobteiligen Kautschuklatex, wobei ein feinteiliger Kautschuklatex hergestellt wird und anschließend durch Zugabe eines amphiphilen Copolymers nach einem oder mehreren Ansprüchen 1 bis 6 agglomeriert wird.

**Claims**

1. Process for the agglomeration of finely particulate rubber latices by addition of a water-containing solution of a water-soluble amphiphilic block copolymer consisting of at least one hydrophilic segment and at least one hydrophobic segment, **characterized in that** the molecular weight HB of the largest hydrophobic segment and the molecular weight HL of the largest hydrophilic segment of the amphiphilic block copolymer exceed the following minimum values:

$$HB > 500 \text{ g/mol}$$

and

$$HL > 2000 \text{ g/mol.}$$

2. Process according to Claim 1, **characterized in that** the hydrophilic segment of the block copolymer consists of ethylene oxide, acrylamide, alkaline salts of (meth)acrylic acid, vinylpyrrolidone, N-, 2- and 4-vinylpyridine, ethyleneimines, alkaline salts of 4-styrenesulphonic acid, vinyl alcohol, dimethylaminoethyl (meth)acrylate, hydroxyethyl (meth)acrylate; a mixture of these monomers; or a mixture of one or more of the hydrophilic monomers mentioned with up to 30 per cent by weight of hydrophobic monomers.

3. Process according to either or both of Claims 1 and 2, **characterized in that** the hydrophobic segment of the block copolymer consists of at least one hydrophobic monomer selected from the group consisting of styrene, α-methylstyrene and their ring-substituted derivatives; olefins with 3 to 12 carbon atoms; alkyl acrylates, alkyl methacrylates; propylene oxide; dimethylsiloxane, phenylmethylsiloxane; aliphatic hydroxycarboxylic acids; esters of aromatic or aliphatic dicarboxylic acids with aliphatic diols; urethanes derived from aromatic or aliphatic diisocyanates with aliphatic diols.

4. Process according to one or more of Claims 1 to 3, **characterized in that** an emulsifier used for the latex to be agglomerated comprises alkali metal salts of dimeric or trimeric fatty acids or their mixture with up to 50% of other anionic emulsifiers.

5. Process according to one or more of Claims 1 to 4, **characterized in that** an emulsifier used for the latex to be agglomerated comprises an alkaline salt of a saturated or unsaturated dimer of an unsaturated aliphatic carboxylic acid.

6. Process according to one or more of Claims 1 to 5, **characterized in that** the agglomeration is carried out in a continuous procedure. '

7. Use of the coarsely particulate rubber latices produced according to one or more of Claims 1 to 6 for the production of impact-resistant thermoplastically processable moulding compositions.

8. Process for producing a coarsely particulate rubber latex, wherein a finely particulate rubber latex is produced and subsequently agglomerated by addition of an amphiphilic copolymer according to one or more of Claims 1 to 6.

**Revendications**

1. Procédé pour l'agglomération de latex de caoutchouc finement divisés, par addition d'une solution aqueuse d'un copolymère séquencé amphiphile hydrosoluble consistant en au moins un segment hydrophile et au moins un segment hydrophobe, **caractérisé en ce que** la masse moléculaire HB du plus grand segment hydrophobe et la masse moléculaire HL du plus grand segment hydrophile du copolymère séquencé amphiphile excèdent les valeurs minimales suivantes :

$$HB > 500 \text{ g/mole}$$

et

$$HL > 2\,000 \text{ g/mole.}$$

2. Procédé selon la revendication 1, **caractérisé en ce que** le segment hydrophile du copolymère séquencé consiste en oxyde d'éthylène, acrylamide, sels alcalins d'acide (méth)acrylique, vinylpyrrolidone, N,2- et 4-vinylpyridine, éthylène-imines, sels alcalins d'acide 4-styrène-sulfonique, alcool vinylique, (méth)acrylate de diméthylaminoéthyle, (méth)acrylate d'hydroxyéthyle ; en un mélange de ces monomères ; ou en un mélange d'un ou plusieurs des monomères hydrophiles cités, avec jusqu'à 30 % en poids de monomères hydrophobes.

3. Procédé selon la revendication 1 et/ou la revendication 2, **caractérisé en ce que** le segment hydrophobe du copolymère séquencé consiste en au moins un monomère hydrophobe choisi dans le groupe constitué par : le styrène, l'$\alpha$-méthylstyrène et leurs dérivés substitués sur le noyau ; des oléfines ayant de 3 à 12 atomes de carbone ; des acrylates d'alkyle, des méthacrylates d'alkyle ; l'oxyde de propylène ; le diméthylsiloxane, le phénylméthylsiloxane ; des acides hydroxylés aliphatiques ; des esters d'acides dicarboxyliques aromatiques ou aliphatiques avec des diols aliphatiques ; des uréthannes constitués de diisocyanates aliphatiques ou aromatiques avec des diols aliphatiques.

4. Procédé selon une ou plusieurs des revendications 1 à 3, **caractérisé en ce qu'**on utilise comme émulsifiant pour le latex à agglomérer des sels alcalins d'acides gras dimères ou trimères ou d'un mélange de ceux-ci avec jusqu'à 50 % d'autres émulsifiants anioniques.

5. Procédé selon une ou plusieurs des revendications 1 à 4, **caractérisé en ce qu'**on utilise comme émulsifiant pour le latex à agglomérer un sel alcalin d'un dimère saturé ou insaturé d'un acide carboxylique aliphatique insaturé.

6. Procédé selon une ou plusieurs des revendications 1 à 5, **caractérisé en ce que** l'agglomération est effectuée en mode opératoire continu.

7. Utilisation des latex de caoutchouc à grosses particules, préparés selon une ou plusieurs des revendications 1 à 6, pour la production de matières à mouler résistantes au choc, aptes à la transformation thermoplastique.

8. Procédé pour la préparation d'un latex de caoutchouc à grosses particules, dans lequel on prépare un latex de caoutchouc finement divisé et on l'agglomère ensuite par addition d'un copolymère amphiphile selon une ou plusieurs des revendications 1 à 6.

# Fig. 1

Teilchengrößenverteilung vom Latex 1 (nicht agglomeriert)

EP 1 265 932 B1

# Fig. 2

Teilchengrößenverteilung vom agglomerierten Latex aus Beispiel 1

EP 1 265 932 B1

# Fig. 3

Dunkelfeldmikroskopische Aufnahme vom agglomerierten Latex aus Beispiel 2

400 Fach Vergrößerung

1000 Fach Vergrößerung

EP 1 265 932 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 1247665 A
- DE 1269360 A
- DE 2606715 A
- DE 2645082 A
- US 3288741 A
- EP 330865 A
- DE 2323547 A
- US 4014843 A
- US 4680321 A
- DE 2427960 A
- EP 249554 A
- DE 3639904 A
- DE 3913509 A